# NEUE EUROPÄISCHE PATENTSCHRIFT

(11) **EP 2 107 949 B2**
(45) Veröffentlichungstag und Bekanntmachung des Hinweises auf die Entscheidung über den Einspruch: **26.02.2014**
(45) Hinweis auf die Patenterteilung: 12.05.2010
(21) Anmeldenummer: 07818585.7
(22) Anmeldetag: 01.10.2007
(51) Int. Cl.: B05D 3/04, B05D 5/00, C09D 5/20

(54) **VERFAHREN ZUR APPLIKATION EINER FLÜSSIGFOLIE NACH WÄSSRIGER VORBEHANDLUNG DER ZUR BESCHICHTENDEN OBERFLÄCHE**
DEVICE AND METHOD FOR APPLYING A LIQUID COATING TO A SURFACE
DISPOSITIF ET PROCÉDÉ DESTINÉS À L'APPLICATION D'UN REVÊTEMENT LIQUIDE SUR UNE SURFACE

(30) Priorität: 20.12.2006 DE 102006060398
(43) Veröffentlichungstag der Anmeldung: 14.10.2009
(73) Patentinhaber: Mankiewicz Gebr. & Co. (GmbH & Co. KG), D-21107 Hamburg (DE)
(72) Erfinder: GRAU, Michael, 22605 Hamburg (DE)
(74) Vertreter: Eisenführ Speiser
(86) Internationale Anmeldenummer: PCT/EP2007/008505
(87) Internationale Veröffentlichungsnummer: WO 2008/083733

(56) Entgegenhaltungen:
- EP-A- 0 849 298
- WO-A-2004/054727
- DE-A1- 10 311 420
- DE-A1- 19 921 885
- DE-C1- 19 814 390
- US-A1- 2002 077 377
- US-A1- 2002 160 224
- US-A1- 2003 163 910
- US-A1- 2004 009 354
- U. ZORLL: 'Römpp Lexikon', Bd. 10, GEORG THIEME VERLAG, STUTTGART - NEW YORK Seiten 374 - 375

## Beschreibung

Die Erfindung betrifft ein Verfahren zur Herstellung eines entfernbaren Oberflächenschutzes durch Applikation einer flüssigen, härtbaren Beschichtungszusammensetzung (auch Flüssigfolie genannt), bei dem die zu schützende Oberfläche mit Wasser oder einer wässrigen Lösung grenzflächenaktiver Substanzen behandelt und danach die Beschichtungszusammensetzung aufgebracht wird. Die Erfindung betrifft darüber hinaus die Verwendung von Wasser oder wässrigen Lösungen grenzflächenaktiver Substanzen in einem solchen Verfahren. Letztendlich betrifft die Erfindung auch einen derartigen entfernbaren Oberflächenschutz.

Üblicherweise werden Kraftfahrzeuge nach der Produktion mit einem Oberflächenschutz versehen, der den Decklack vor Beschädigungen wie Zerkratzen schützt. Dieser Oberflächenschutz wird vor Übergabe des Fahrzeugs an den Käufer entfernt. Beispielsweise sind Wachsbeschichtungen bekannt, die mit Lösungsmitteln entfernt werden müssen und sich deshalb als nachteilig herausgestellt haben. Ferner ist das Aufkleben von Folien vorgeschlagen worden, wobei das Aufbringen allerdings mit einem unverhältnismäßig hohen Zeitaufwand verbunden ist. Zudem kann es beim Aufkleben zu einer Beschädigung der Oberfläche kommen, die ja eigentlich vermieden werden soll. Davon ausgehend wird in der DE 196 52 728 A1 eine Flüssigkeit beschrieben, die zu einer Folie aushärtet, wobei die Folle vor Auslieferung an den Kunden entfernt wird.

Die DE 198 54 760 A1 beschreibt ein solches Verfahren zur Herstellung eines entfernbaren Oberflächenschutzes auf einer lackierten Kraftfahrzeugkarosserie. Dabei wird eine Flüssigkeit auf die lackierte Karosseriefläche gesprüht. Diese Flüssigkeit verfestigt sich zu einer abziehbaren Folie, deshalb wird eine solche flüssige Beschichtungszusammensetzung auch als Flüssigfolie bezeichnet. Gemäß der DE 198 54 760 A1 erfolgt die Applikation der Flüssigfolie mit zwei Fächerdüsen unterschiedlicher Breite, um ein versehentliches Besprühen von Oberflächenbereichen, die nicht beschichtet werden sollen (Overspray), zu vermeiden und eine kantenscharfe Applikation zu erreichen. Nachteile des in der DE 198 54 760 A1 beschriebenen Verfahrens sind:
Die ungleichmäßige Schichtdicke der applizierten Beschichtungszusammensetzung. Die Schichtdicke ist an den Rändern der applizierten Bahn höher als in der Mitte der Bahn.
- Die Breite der mit einer Fächerdüse applizierten Bahn schwankt in Abhängigkeit vom Druck, unter dem die Zusammensetzung aus der Düse ausgetragen wird. Um größere Flächen mit einem geschlossenen Film aus einzelnen Bahnen zu belegen, müssen die aus der Fächerdüse ausgetragenen Bahnen überlappend appliziert werden. Dadurch wird die Schichtdicke des applizierten Filmes in den Bereichen der Überlappung der Bahnen zusätzlich erhöht.
- Ungleichmäßige Schichtdicken des Filmes führen zu einem ungleichmäßigen Trocknungsverhalten. Um an allen Stellen eine vollständig durchgetrocknete Folie zu erhalten, ist es notwendig, die Trocknungsbedingungen an der größtmöglichen auftretenden Schichtdicke zu orientieren. Das erfordert höhere Trocknungstemperaturen und/oder längere Trocknungszeiten.

Die DE 10 2004 018 597 A1 beschreibt für die Applikation einer Flüssigfolie entlang einer Bahnrichtung einen Applikationskopf mit mehreren hintereinander angeordneten Reihen nebeneinander liegender Rundstrahldüsen (Multistrahldüse). Die Verwendung der Multistrahldüse bei der Flüssigfolienapplikation hat verschiedene Vorteile:
- Es wird gleichzeitig eine Vielzahl von Flüssigfolienraupen nebeneinander ausgetragen. Diese Raupen verfließen unmittelbar nach der Applikation ineinander und bilden eine Flüssigfolienbahn. Die Schichtdicke der in der Mitte einer Bahn abgelegten Raupen und der am Rand einer Bahn abgelegten Raupen ist gleich, d.h. die Schichtdicke der so applizierten Bahn ist über die Bahnbreite gleichmäßiger als bei Verwendung einer Fächerdüse.
- Bei Verwendung einer Multistrahldüse ist die Breite der applizierten Bahn weniger stark vom Materialdruck abhängig als bei Verwendung einer Fächerdüse. Deshalb ist es zur Beschichtung größerer Flächen mit einem geschlossenen Film nicht notwendig, die einzelnen Bahnen überlappend aufzutragen. Die Schichtdickenverteilung ist deshalb gleichmäßiger als bei Verwendung einer Fächerdüse.

Allerdings sind mit dem Einsatz einer Multistrahldüse auch Nachteile verbunden:
- Zur Bildung einer gleichmäßig geschlossenen Bahn müssen die einzelnen nebeneinander abgelegten Raupen ineinander verlaufen. Deshalb müssen die einzelnen Raupen eine relativ hohe Schichtdicke aufweisen. Der Materialverbrauch ist dementsprechend hoher als bei Verwendung einer Fächerdüse.
- Um hinreichend hohe Schichtdicken der einzelnen Materialraupen zu erzeugen, ist wiederum ein relativ hoher Materialdruck notwendig. Das führt dazu, daß das Material mit vergleichsweise hoher Geschwindigkeit aus der Multistrahldüse ausgetragen wird und nach dem Auftreffen auf die zu beschichtende Oberfläche zurückspritzt. Die herumfliegenden Materialtröpfchen verunreinigen die Fahrzeugoberfläche außerhalb des Bereichs, der beschichtet werden soll. Diese Verunreinigungen müssen nach der Trocknung/Aushärtung der Flüssigfolie aufwendig von Hand entfernt werden.

Aus der US 2003/0163910 A1 ist ein Verfahren und eine Vorrichtung zum Bilden eines Schutzfilms auf einer aufgesprühten Beschichtung auf einem Automobil bekannt, bei welchem eine abziehbare Farbe aufgetragen wird, um so den schützenden Film zu bilden.

Aufgabe der vorliegenden Erfindung war es, ein Verfahren zur Verfügung zu stellen, mit dem die Vorteile ausgenutzt werden können, die mit dem Einsatz einer Multistrahldüse verbunden sind. Gleichzeitig sollten die Nachteile vermieden werden, die mit einem derartigen Einsatz einer Multistrahldüse verbunden sind, insbesondere der damit verbundene erhöhte Materialverbrauch und das Overspray. Letztendlich besteht immer ein Bedarf nach einem Verfahren mit einem geringeren Materialbedarf und einem entsprechend dünneren entfernbaren Oberflächenschutz.

Es hat sich nun überraschend herausgestellt, dass diese Aufgaben gelöst und weitere Probleme des Standes der Technik vermieden werden, indem die zu beschichtende Oberfläche mit Wasser oder einer wässrigen Lösung einer oder mehrerer grenzflächenaktiver Substanzen behandelt und daraufhin die Beschichtungszusammensetzung aufgebracht wird. Durch Behandlung der Oberfläche, beispielsweise einer lackierten Fahrzeugkarosserie, mit Wasser oder wässrigen Lösungen grenzflächenaktiver Substanzen und Applikation der Flüssigfolie auf die vorbehandelten Flächen erhält man bereits bei geringeren Schichtdicken eine geschlossen verlaufene Bahn und einen entsprechenden Film als bei Applikation der Flüssigfolie auf trockene Flächen. Damit wird der Materialverbrauch pro Flächeneinheit reduziert, und trotzdem wird ein geschlossener Film erzeugt. Darüber hinaus kann der Materialdruck soweit reduziert werden, daß das Zurückspritzen des Beschichtungsstoffes vermieden werden kann.

Ein wesentlicher Vorteil des erfindungsgemäßen Applikationsverfahrens mit Vorbenetzung gegenüber dem nicht erfindungsgemäßen Applikationsverfahren ohne Vorbenetzung ist die Materialersparnis von 15 bis 20 % pro Flächeneinheit, die beim erfindungsgemäßen Verfahren erzielt wird.

Zwar ist das Waschen zu beschichtender Oberflächen mit Wasser oder wässrigen Reinigungsmitteln als Vorbehandlung vor einer Beschichtung bekannt. Dabei werden Verunreinigungen entfernt, die die Haftung der Beschichtung auf der Oberfläche stören könnten. Das Wasser oder das wässrige Reinigungsmittel wird aber vor Beginn der Applikation des Beschichtungsstoffes von der Oberfläche vollständig entfernt.

Dementsprechend betrifft die Erfindung ein Verfahren zur Herstellung eines entfernbaren Oberflächenschutzes gemäß Anspruch 1.

In einer bevorzugten Ausführungsform wird die Oberfläche in Schritt a) mit Wasser behandelt, das gegebenenfalls durch Kondensation auf die Oberfläche aus mit Wasser übersättigter Luft aufkondensiert werden kann. Die Vorbehandlung durch Kondensation hat den Vorteil, daß die erzeugten Wasser-Schichtdicken gleichmäßig und gering sind. Darüber hinaus kann dabei auf Applikationstechnik für das Versprühen von Wasser verzichtet werden. In einer weiteren bevorzugten Ausführungsform erfolgt die Behandlung mit Wasser auf die Oberfläche durch Aufsprühen.

In einer weiteren bevorzugten Ausführungsform beträgt die Temperatur der Oberfläche bei Schritt a) 9°C bis 50°C, vorzugsweise 5°C bis 40°C, bevorzugter 90°C bis 30°C, insbesondere 15°C bis 25°C.

In allen Ausführungsformen der Erfindung ist bevorzugt, dass die Oberfläche eine mit Decklack lackierte Oberfläche eines Kraftfahrzeugs ist. Der Beschichtungsaufbau auf der Fahrzeugoberfläche ist vorzugsweise eine typische PKW-Karossenlackierung, die z.B. aus einer kathodischen Tauchlackierung, optional einem Füller, einem Basecoat und zusätzlich einem Clearcoat als Decklack besteht. Es ist aber auch möglich, daß an Stelle von Basecoat und transparentem Clearcoat ein pigmentierter Decklack eingesetzt wird. Der als abschließender Decklack eingesetzte transparente oder pigmentierte Lack kann ein Lack auf Basis von z.B. einem ein- oder zweikomponentigen Polyurethansystem, oder einem Melaminharz/Polyol-System sein. Die zur Formulierung des als Decklack eingesetzten Lacks verwendeten Polyole können Polyester-, Polyacrylat- oder Polycarbonatpolyole sein.

Vorzugsweise erfolgt die Aufbringung der Beschichtungszusammensetzung weniger als 25 Minuten nach Schritt a), bevorzugter 0,1 Sekunden bis 25 Minuten, insbesondere 0,1 Sekunden bis 15 Minuten, wie 0,1 Sekunde bis 10 Minuten, oder 1 Sekunde bis 1 Minute, beispielsweise 1 Sekunde bis 45 Sekunden, oder 1 Sekunde bis 30 Sekunden nach Schritt a).

Die Beschichtungszusammensetzung ist vorzugsweise ein wasserverdünnbarer Beschichtungsstoff auf Basis von z. B. Polymerdispersionen, insbesondere Polyurethandispersionen und besonders bevorzugt Dispersionen von Polyesterurethanen.

Die Beschichtungszusammensetzung wird z. B. durch hydraulisches Zerstäuben (Airless), durch hydraulisches Zerstäuben mit pneumatischer Unterstützung (Airmix), oder durch pneumatisches Zerstäuben appliziert. Dazu können unterschiedliche Düsenkonstruktionen eingesetzt werden, wie z. B. Fächerdüsen, Schlitzdüsen und Rundstrahldüsen.

Bei der Aufbringung der Beschichtungszusammensetzung wird eine Multistrahldüse mit 1 bis 6 Reihen von jeweils 5 bis 500 Düsen, bevorzugter 10 bis 320 Düsen, insbesondere 20 bis 160 Düsen, wie 40 bis 80 Düsen eingesetzt.

Beim erfindungsgemäßen Verfahren können, im Vergleich mit dem Verfahren ohne Vorbenetzung, höher viskose Beschichtungszusammensetzungen eingesetzt werden. Bevorzugte Viskositätsbereiche sind 5 bis 40, vorzugsweise 10 bis 35, insbesondere 15 bis 30 Pa-s.

Die Schichtdicke der gehärteten Beschichtungszusammensetzung beträgt 70 bis 120 µm, wie 80 bis 110 µm oder 90 bis 100 µm.

Das Härten in Schritt c) kann bei erhöhter Temperatur erfolgen, beispielsweise bei 10°C bis 90°C, vorzugsweise 15°C bis 80°C, insbesondere 15°C bis 60°C, wie 20°C bis 50°C.

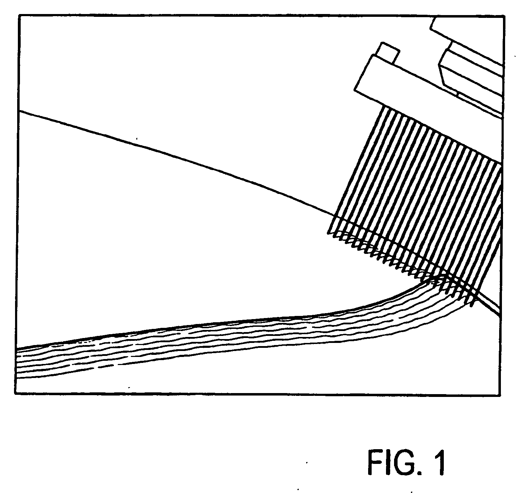

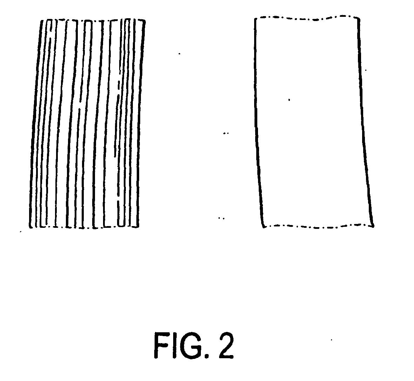

Die Vorteile der Erfindung sind auch aus den Figuren 1 und 2 ersichtlich, wobei
- Figur 1: das Aufbringen der Beschichtungszusammensetzung gemäß Schritt b) zeigt,
- Figur 2: zwei gehärtete Beschichtungen zeigt, wobei rechts eine erfindungs- gemäß hergestellte Beschichtung gezeigt ist und links eine Beschich- tung gezeigt ist, die gemäß einem Verfahren ohne Schritt a) erzeugt wurde, und
- Figur 3: das Entfernen einer erfindungsgemäß hergestellten Beschichtung gezeigt ist.

In Figur 1 ist veranschaulicht, dass die Beschichtungszusammensetzung mittels einer geeigneten Dosiereinrichtung (Pumpe) gefordert und durch eine Düse, die aus einer Vielzahl von Löchern besteht, ausgetragen wird. Die sich nach dem Austritt aus der Düse bildenden einzelnen Raupen vereinigen sich beim Auftreffen auf die Oberfläche zu einem geschlossenen Film. Hierbei ist ein bestimmter Überdruck erforderlich, der das Zusammenfließen der einzelnen Raupen und Bahnen zu einem Film ermöglicht.

Figur 2 veranschaulicht die Vorteile des erfindungsgemäßen Verfahrens und entsprechend hergestellter Beschichtungen. Ziel der Erfindung ist u.a. die Reduzierung der aufgetragenen Menge von Beschichtungszusammensetzung pro Flächeneinheit. Die aufgetragenen Raupen und Bahnen aus Beschichtungszusammensetzung bilden dabei keinen geschlossenen Film aus (links). Erst die Vorbenetzung führt durch Verlaufen der einzelnen Bahnen zu einem Film (rechts). Die zu schützende Oberfläche wird erfindungsgemäß vorbenetzt, was bei der darauffolgenden Applikation der Flüssigfolie zu deren gleichmäßigem Verlaufen führt, und zwar bei geringeren Applikationsdrücken und somit auch Mengen von Beschichtungszusammensetzung.

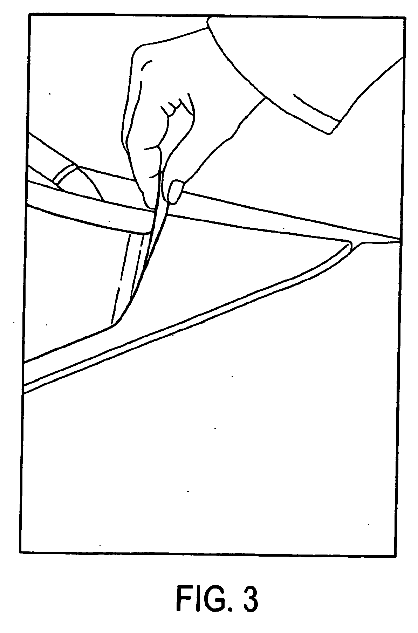

Figur 3 veranschaulicht das Abziehen einer erfindungsgemäß hergestellten Beschichtung gemäß einer Ausführungsform der Erfindung, wobei die Stufe des Abziehens von einer Motorhaube gezeigt ist. Es wurde eine wasserverdünnbare Einkomponentenbeschichtungszusammensetzung auf Basis einer Polyurethandispersion zur Konservierung von Oberflächen wie z.B. Automobilkarossen aufgebracht. Die Zusammensetzung bildet nach erfolgter Trocknung (auch bei Raumtemperatur) eine mechanisch und chemisch hochbeständige Schutzschicht (getrocknete Flüssigfolie). Diese läßt sich von Hand entfernen (abziehen), da sie nur durch relativ schwache Adhäsionskräfte mit der zu schützenden Oberfläche verbunden ist. Die getrocknete Zusammensetzung wird im üblicherweise unmittelbar vor Auslieferung des Automobils an den Kunden durch einfaches Abziehen von der Oberfläche entfernt, was den darunterliegenden Decklack freilegt.

## Patentansprüche

1. Verfahren zur Herstellung eines entfernbaren Oberflächenschutzes, bei dem
a) die Oberfläche mit Wasser behandelt wird,
b) eine flüssige, härtbare Beschichtungszusammensetzung auf die behandelte Oberfläche aufgebracht wird, bevor das Wasser vollständig von der behandelten Oberfläche abgetrocknet ist, und
c) die Beschichtungszusammensetzung gehärtet wird, um eine gehärtete Beschichtung mit einer Schichtdicke von höchstens 200 µm zu bilden,
**dadurch gekennzeichnet, dass** die Beschichtungszusammensetzung aus einer Multistrahldüse mit 1 bis 6 Reihen von jeweils 5 bis 500 Düsen, bevorzugter 10 bis 320 Düsen, insbesondere 20 bis 160 Düsen, wie 40 bis 80 Düsen, aufgebracht wird, wobei die Schichtdicke der gehärteten Beschichtung 70 bis 120 µm beträgt.

2. Verfahren nach Anspruch 1, bei dem das Wasser aufkondensiert wird.

3. Verfahren nach Anspruch 1, bei dem das Wasser auf die Oberfläche aufgesprüht wird.

4. Verfahren nach einem der vorhergehenden Ansprüche, **dadurch gekennzeichnet, dass** die Temperatur der Oberfläche bei Schritt a) bis 50 °C, beispielsweise 1°C bis 50°C, vorzugsweise 5°C bis 40°C, bevorzugter 10°C bis 30°C, insbesondere 15°C bis 25°C beträgt.

5. Verfahren nach einem der vorhergehenden Ansprüche, **dadurch gekennzeichnet, dass** die Oberfläche eine mit Decklack lackierte Oberfläche eines Kraftfahrzeugs ist.

6. Verfahren nach einem der vorhergehenden Ansprüche, **dadurch gekennzeichnet, dass** Schritt b) weniger als 25 Minuten nach Schritt a) durchgeführt wird, bevorzugter 0,1 Sekunden bis 25 Minuten, insbesondere 0,1 Sekunden bis 15 Minuten, wie 0,1 Sekunde bis 10 Minuten, oder 1 Sekunde bis 1 Minute, beispielsweise 1 Sekunde bis 45 Sekunden, oder 1 Sekunde bis 30 Sekunden nach Schritt a).

7. Verfahren nach Anspruch 5 oder 6, **dadurch gekennzeichnet, dass** der Decklack ausgewählt ist aus Decklacken auf Basis eines ein- oder zweikomponentigen Polyurethansystems oder eines Melaminharz/Polyol-Systems, wobei bevorzugte Polyole Polyester-, Polyacrylat- oder Polycarbonatpolyole sind.

8. Verfahren nach einem der vorhergehenden Ansprüche, **dadurch gekennzeichnet, dass** die Beschichtungszusammensetzung ausgewählt ist aus wasserverdünnbaren Beschichtungsstoffen auf Basis von beispielsweise Polymerdispersionen, insbesondere Polyurethandispersionen und besonders bevorzugt Dispersionen von Polyesterurethanen.

9. Verfahren nach einem der vorhergehenden Ansprüche, **dadurch gekennzeichnet, dass** die Schichtdicke der gehärteten Beschichtung 80 bis 110 µm oder 90 bis 100 µm beträgt.

10. Verfahren nach einem der vorhergehenden Ansprüche, **dadurch gekennzeichnet, dass** das Härten in Schritt c) bei erhöhter Temperatur erfolgt.

## Claims

1. Method of producing a removable surface protection, whereby
a) the surface is treated with water,
b) a liquid, curable coating composition is applied to the treated surface before the water has completely dried on the treated surface, and
c) the coating composition is cured in order to form a cured coating with a layer thickness of at most 200 µm,
**characterised in that** the coating composition is applied from a multi-jet nozzle with 1 to 6 rows of 5 to 500 nozzles each, more preferably 10 to 320 nozzles, in particular 20 to 160 nozzles, for example 40 to 80 nozzles, and the layer thickness of the cured coating is 70 to 120 µm.

2. Method as claimed in claim 1, whereby the water is condensed on.

3. Method as claimed in claim 1, whereby the water is sprayed onto the surface.

4. Method as claimed in one of the preceding claims, **characterised in that** the temperature of the surface during step a) is up to 50°C, for example 1°C to 50°C, preferably 5°C to 40°C, more preferably 10°C to 30°C, in particular 15°C to 25°C.

5. Method as claimed in one of the preceding claims, **characterised in that** the surface is a surface of an automotive vehicle painted with a topcoat.

6. Method as claimed in one of the preceding claims, **characterised in that** step b) is implemented less than 25 minutes after step a), more preferably 0.1 second to 25 minutes, in particular 0.1 second to 15 minutes, for example 0.1 second to 10 minutes, or 1 second to 1 minute, for example 1 second to 45 seconds, or 1 second to 30 seconds after step a).

7. Method as claimed in claim 5 or 6, **characterised in that** the topcoat is selected from topcoats with a base of a one- or two-component polyurethane system or a melamine resin/polyol system, and preferred polyols are polyester, polyacrylate or polycarbonate polyols.

8. Method as claimed in one of the preceding claims, **characterised in that** the coating composition is selected from water-thinnable coating substances with a base of polymer dispersions, for example, in particular polyurethane dispersions, and particularly preferably dispersions of polyester urethanes.

9. Method as claimed in one of the preceding claims, **characterised in that** the layer thickness of the cured coating is 80 to 110 µm or 90 to 100 µm.

10. Method as claimed in one of the preceding claims, **characterised in that** curing in step c) takes place at an elevated temperature.

## Revendications

1. Procédé de production d'une protection de surface amovible, dans lequel
a) la surface est traitée avec de l'eau,
b) une composition de revêtement liquide, durcissable, est appliquée sur la surface traitée avant que l'eau n'ait complètement séché de la surface traitée, et
c) la composition de revêtement est durcie pour former un revêtement durci, présentant une épaisseur de couche d'au plus 200 µm,
**caractérisé en ce que** la composition de revêtement est appliquée à partir d'une buse à jets multiples, comportant 1 à 6 rangées de 5 à 500 buses respectivement, de préférence de 10 à 320 buses, en particulier de 20 à 160 buses, notamment de 40 à 80 buses, l'épaisseur de couche du revêtement durci étant de 70 à 120 µm.

2. Procédé selon la revendication 1, dans lequel l'eau est condensée.

3. Procédé selon la revendication 1, dans lequel l'eau est pulvérisée sur la surface.

4. Procédé selon l'une des revendications précédentes, **caractérisé en ce que** la température de la surface à l'étape a) va jusqu'à 50° C, notamment est de 1° C à 50° C, de préférence de 5° C à 40° C, de préférence de 10° C à 30° C, en particulier de 15° C à 25° C.

5. Procédé selon l'une des revendications précédentes, **caractérisé en ce que** la surface est une surface laquée avec une peinture de finition d'un véhicule automobile.

6. Procédé selon l'une des revendications précédentes, **caractérisé en ce que** l'étape b) est réalisée moins de 25 minutes après l'étape a), de préférence 0,1 seconde à 25 minutes, en particulier 0,1 seconde à 15 minutes, notamment 0,1 seconde à 10 minutes, ou 1 seconde à 1 minute, par exemple 1 seconde à 45 secondes, ou 1 seconde à 30 secondes après l'étape a).

7. Procédé selon la revendication 5 ou 6, **caractérisé en ce que** la peinture de finition est choisie parmi les peintures de finition à base d'un système de polyuréthane à un ou deux composants ou d'un système de résine de mélamine/polyol, les polyols préférés étant les polyols de polyester, de polyacrylate ou de polycarbonate.

8. Procédé selon l'une des revendications précédentes, **caractérisé en ce que** la composition de revêtement est choisie parmi les substances de revêtement diluables à l'eau, à base par exemple de dispersions de polymères, en particulier de dispersions de polyuréthane et, de manière particulièrement préférée, de dispersions de polyesteruréthanes.

9. Procédé selon l'une des revendications précédentes, **caractérisé en ce que** l'épaisseur de couche du revêtement durci est de 80 à 110 µm ou 90 à 100 µm.

10. Procédé selon l'une des revendications précédentes, **caractérisé en ce que** le durcissement à l'étape c) s'effectue à une température supérieure.
